# EUROPÄISCHE PATENTSCHRIFT

(11) **EP 3 919 808 B1**
(45) Veröffentlichungstag und Bekanntmachung des Hinweises auf die Patenterteilung: **11.10.2023**
(21) Anmeldenummer: 21177429.4
(22) Anmeldetag: 02.06.2021
(51) Int. Cl.: F21S 2/00, F21S 8/00, F21V 7/05, F21V 8/00, F21Y 115/10

(54) **LEUCHTE**
LAMP
LUMINAIRE

(30) Priorität: 02.06.2020 DE 102020114624; 30.07.2020 DE 102020120104
(43) Veröffentlichungstag der Anmeldung: 08.12.2021
(73) Patentinhaber: Bartenbach Holding GmbH, 6071 Aldrans (AT)
(72) Erfinder: Reisecker, Christian, 6166 Fulpmes (AT); Georg, Spielberger, 6020 Innsbruck (AT); Anselm, Christian, 6112 Wattens (AT)
(74) Vertreter: Thoma, Michael

(56) Entgegenhaltungen:
- KR-A- 20170 018 496
- US-A1- 2017 031 085
- US-A1- 2018 074 255
- US-B1- 8 033 706

## Beschreibung

Die vorliegende Erfindung betrifft eine Leuchte mit einer Lichtquelle sowie einer flachen, kachel- oder flunderartigen Linse mit einer Lichteintrittsfläche zum Einfangen des Lichts der Lichtquelle und einer Lichtaustrittsfläche zum Verteilen des eingefangenen Lichts auf einen Zielbereich, wobei die Linse auf einer der Lichtaustrittsfläche gegenüberliegenden Rückseite ein Facettenfeld mit lichtreflektierenden Facetten aufweist. Insbesondere betrifft die Erfindung eine solche Leuchte in Form einer flächig abstrahlenden Leuchtfliese oder -kachel.

Solche Leuchten mit flachen, flunderartigen Linsen sind beispielsweise aus den Schriften US 2017/0031085 A1, US 2018/074255 A1, KR 2017 0018496 A und US 8 033 706 B1 bekannt. Dabei zeigt die erstgenannte US 2017/0031085 eine Stra-βenverkehrsleuchte mit einer flachgedrückten Linse und einem umlaufenden Reflektorsteg, bei der LEDs direkt in eine Schmalseite der Linse hineinstrahlen.

In jüngerer Zeit werden flächig abstrahlende Leuchtfliesen bzw. -kacheln mit LED-Technik ausgeführt. Um trotz der punktförmigen LEDs bzw. Lichtquellen eine im Vergleich dazu großflächige Abstrahlfläche zu erhalten, können flache, insgesamt kachel- oder flunderartige Linsen verwendet werden, die das von der punktförmigen Lichtquelle abgestrahlte Licht einfangen und verteilen. Die Linsen besitzen dabei zwei große Flachseiten, von denen eine die Lichtaustrittsfläche bildet und die gegenüberliegende Rückseite ein Facettenfeld mit lichtreflektierenden Facetten besitzen kann, die mit Totalreflexion arbeiten können und/oder auch reflektierend beschichtet sein können. Durch das Facettenfeld wird eine Vergleichmäßigung erzielt, um die Lichtaustrittsfläche zumindest einigermaßen homogen, gleichmäßig leuchtend erscheinen zu lassen.

Üblicherweise bildet die Lichteintrittsfläche eine Mulde oder eine schüssel- bzw. wannenförmige Ausnehmung im Zentrum der Linse, mit der die Linse über die Lichtquelle gestülpt wird, sodass das Licht der in den Halbraum strahlenden Lichtquelle bzw. LED zumindest näherungsweise vollständig eingefangen wird.

Ein bei herkömmlichen Leuchtfliesen noch verbesserungsfähiger Aspekt ist es dabei, das im Zentrum der Linse eingefangene Licht tatsächlich gleichmäßig auf die breite Lichtaustrittsfläche zu verteilen, um die Leuchtfliese gleichmäßig leuchten zu lassen. Bei nicht kreisrunden Linsen mit rechteckiger oder polygonaler Umfangskontur wird dies noch schwieriger, insbesondere wenn an der Rückseite ein Facettenfeld vorgesehen ist, um eine Lichtdurchmischung zu erzielen. Oft führen die Facetten zu einer ungleich erscheinenden Musterung der leuchtenden Abstrahlfläche. Zudem erscheint der Zentralbereich der Linse, in dem das Licht direkt von der Lichteintrittsfläche her kommend, ohne Reflexion an den Facetten abgestrahlt wird, oft heller oder zumindest anders als der ringförmige Umgebungsbereich, der mit dem an den Facetten reflektierten Licht leuchtet. Die Leuchtkachel erscheint daher nicht vollständig homogen leuchtend.

Aus der Schrift US 2016/0047969 A1 ist eine Straßen- bzw. Parkplatzleuchte bekannt, die ein flachgedrücktes, linsenähnliches Optikelement aufweist, bei dem die Lichteintrittsfläche für die Lichtquelle in Form einer halbzylindrischen Rinne an einer Flachseite des Optikelements vorgesehen ist. Die Lichtquelle in Form einer LED ist in der rinnenförmigen Ausnehmung versenkt aufgenommen und strahlt frontal auf die Lichteintrittsfläche. Ein Teil des eingestrahlten Lichts trifft direkt auf die facettierte Rückseite des Optikelements, während ein anderer Teil der Lichtstrahlen zunächst an der Vorderseite totalreflektiert und hierdurch auf die facettierte Rückseite umgelenkt wird, um von dort dann zurück zur Lichtaustrittsseite geworfen zu werden. Hierdurch ergibt sich für die auf die Facetten der Rückseite treffenden Lichtstrahlen eine relativ große Divergenz und es entsteht im bestrahlten Zielbereich eine relativ unkontrollierte Lichtstärkeverteilung.

Zum anderen ergeben sich bei herkömmlichen Leuchtkacheln oft sogenannte Multischatten im beleuchteten Zielbereich. Solche Multischatten sind allgemein bekannt z. B. von Flutlicht beleuchteten Fußballfeldern und führen dazu, dass ein im Zielbereich befindlicher Gegenstand oder eine sich dort bewegende Person Schatten in verschiedene Richtungen wirft. Um eine möglichst gleichmäßige, homogene und für visuell anspruchsvolle Tätigkeiten geeignete Ausleuchtung des Zielbereichs zu erzielen, sollten solche Multischatten tunlichst vermieden werden.

Der vorliegenden Erfindung liegt daher die Aufgabe zugrunde, eine verbesserte Leuchte der eingangs genannten Art zu schaffen, die Nachteile des Standes der Technik vermeidet und letzteren in vorteilhafter Weise weiterbildet. Insbesondere soll eine Leuchtkachel geschaffen werden, deren Lichtabstrahlfläche gleichmäßig leuchtend erscheint und homogen abstrahlt und den Zielbereich gleichmäßig ohne Multischatten ausleuchtet, ohne dies durch eine klobige, dicke Bauweise erkaufen zu müssen oder Beeinträchtigungen bei der Aneinandersetzbarkeit der Leuchtfliesen zu einem Leuchtfliesenmuster in Kauf nehmen zu müssen.

Erfindungsgemäß wird die genannte Aufgabe durch eine Leuchte gemäß Anspruch 1 gelöst. Bevorzugte Ausgestaltungen der Erfindung sind Gegenstand der abhängigen Ansprüche.

Es wird also vorgeschlagen, die Lichtquelle zum Rand der Linse hin zu versetzen und das Licht von der Schmalseite her in die Linse einzuleiten, und dabei den von der Lichtquelle bestrahlten, an sich zu breiten Halbraum mittels eines Reflektors zu verjüngen, so dass die Lichteintrittsfläche aus einem etwa Viertelraum bestrahlt wird. Erfindungsgemäß ist die Lichteintrittsfläche an der Schmalseite der Linse zwischen der Lichtaustrittsfläche und der facettierten Rückseite der Linse vorgesehen und die Lichtquelle randseitig von der Linse zwischen der genannten Lichteintrittsfläche der Linse und einem seitlichen, die Linse randseitig einfassenden Reflektor angeordnet, sodass ein Teil des von der Lichtquelle abgegebenen Lichts direkt auf die Lichteintrittsfläche trifft und ein anderer Teil des von der Lichtquelle abgegebenen Lichts vom Reflektor aus umgelenkt auf die Lichteintrittsfläche trifft. Der Reflektor ist dabei derart ausgebildet und angeordnet, dass der von der Lichtquelle an sich bestrahlte Halbraum sozusagen verkleinert, erfindungsgemäß auf einen etwa Viertelraum reduziert wird, der der Lichteintrittsfläche an der Schmalseite der Linse zugewandt ist, sodass insgesamt betrachtet die Lichteintrittsfläche mit einem Lichtstrahlenbündel bestrahlt wird, das nicht mehr die breite Aufweitung des Halbraums, sondern nur noch die des verjüngten, durch den Reflektor begrenzten Strahlungsraums hat.

Der die Linse randseitig einfassende Reflektor umfaßt dabei ein im Wesentlichen ebenes Reflektorpanel, beispielsweise in Form eines streifenförmigen Reflektorblechs, und erstreckt sich etwa parallel zu der Hauptabstrahlrichtung der Lichtquelle, sodass der Reflektor sozusagen nur eine Hälfte der in den Halbraum strahlenden Lichtstrahlen der Lichtquelle reflektiert. Die Lichteintrittsfläche wird dabei aus einem Viertelraum bestrahlt, wobei ein Teil der Strahlen Direktlicht aus der Lichtquelle und der andere Teil Indirektlicht ist, das vom Reflektor reflektiert wurde.

Trotz Anordnung der Lichtquelle an der Schmalseite der Linse wird die Lichtquelle in ihrer Ausrichtung weiterhin so belassen, als wäre sie in einer zentralen Lichteintrittsmulde aufgenommen, das heißt die Lichtquelle ist trotz seitlicher Randanordnung weiterhin ausgerichtet, dass sie mit ihrer Hauptabstrahlrichtung etwa parallel zur Hauptachse der Linse ausgerichtet ist, die senkrecht zur Lichtaustrittsfläche der Linse steht. Wenn die Lichtaustrittsfläche eine leichte Wölbung besitzt, kann eine Tangentialebene dazu angenommen werden, auf die dann die besagte Hauptachse der Linse senkrecht ist und zu der dann auch die Hauptabstrahlrichtung der Lichtquelle senkrecht ist, sodass die Lichtquelle aufgrund ihrer seitlichen Anordnung an der Schmalseite an sich einen Teil ihres Lichts in die verkehrte Richtung, nämlich weg von der Lichteintrittsfläche der Linse, strahlt. Im

Zusammenspiel mit der Lichtquellenanordnung wird aber weiterhin vorgeschlagen, die Schmalseite bzw. Randseite der Linse im Bereich der Lichtquelle mit einem Reflektor einzufassen, um lichttechnische Verluste aufgrund an sich in die falsche Richtung abgestrahlten Lichts zu vermeiden. Gleichzeitig kann die Divergenz der auf die Facetten treffenden Strahlen reduziert werden.

Durch die an den Rand versetzte Lichtquelle kann auch der bei herkömmlichen Leuchtkacheln anders leuchtende, inhomogen erscheinende Zentralbereich vermieden werden. Durch Reflexion und/oder Totalreflexion an den Facetten und/oder der Lichtaustrittsfläche kann das Licht in der Linse gleichmäßig durchmischt und auf die im Wesentlichen ganzen Lichtaustrittsfläche gleichmäßig verteilt werden, wodurch ein insgesamt homogen leuchtendes Erscheinungsbild erzielt werden kann. Zudem wird es weniger schwierig, eckig konturierte Linsen bzw. Leuchtkacheln homogen leuchtend erscheinen zu lassen.

Ferner kann durch das Zusammenspiel der Ausrichtung der Lichtquelle mit deren Hauptabstrahlrichtung etwa parallel zum näherungsweise ebenen Reflektor und etwa parallel zur Hauptachse der Linse und dem Anordnen der Lichtquelle zwischen einem Reflektor und der Schmalseite der Linse erreicht werden, dass die auf die facettierte Rückseite der Linse treffenden Lichtstrahlen eine deutlich geringere Divergenz zeigen, als dies beim Stand der Technik der Fall ist. Zusätzlich zu der Ablenkung beim Eintritt in das Medium der Linse werden die Lichtstrahlen mindestens ein weiteres Mal umgelenkt, nämlich entweder per Totalreflexion an der Lichtaustrittsfläche oder an dem genannten Reflektor, sodass die Aufweitung der Lichtstrahlen reduziert bzw. die sich an der facettierten Rückseite einfindenden Lichtstrahlen nur mehr begrenzt voneinander divergieren. Hierdurch kann eine kontrollierte und gezielte Ausleuchtung der Zielfläche bzw. des Zielbereichs erzielt werden.

Der genannte Reflektor kann insbesondere derart ausgebildet und angeordnet sein, dass die Lichtaustrittsfläche der Linse sozusagen virtuell gespiegelt wird und die Lichtstrahlen, die von der Lichtquelle auf den Reflektor treffen, so in die Linse eingeleitet werden (über die Lichteintrittsfläche), dass sie ggf. unter Totalreflexion an der Lichtaustrittsfläche so auf die facettierte Rückseite treffen wie die Strahlen, die ohne Umweg über den Reflektor von der Lichtquelle direkt auf die Lichteintrittsfläche treffen, in die Linse eintreten und über Totalreflexion an der Lichtaustrittsseite auf die Rückseite gelenkt werden. Hierdurch ergibt sich eine insgesamt geringe Strahlendivergenz an den Facetten der Rückseite.

Vorteilhafterweise ist die Konfiguration der Linse, insbesondere auch im Zusammenspiel mit der Lichtquellen- und Reflektoranordnung, derart getroffen, dass das Licht nach der Lichteintrittsfläche zumindest im Wesentlichen nur indirekt auf die facettierte Struktur trifft, vorzugsweise entweder über die Lichtaustrittsfläche und/oder über die Rückfläche und dann über die Lichtaustrittsflächen. Anders als bei Lichtleitern, wo auch Licht direkt nach der Lichteintrittsfläche auf die facettierte Struktur trifft, wird das ins Medium bereits eingetretene Licht, also nach der Lichteintrittsfläche zumindest ein weiteres Mal umgelenkt, bevor es auf die facettierte Struktur trifft. Hierdurch wird es leichter möglich, die facettierte Struktur so auszulegen, dass das Licht gezielt gelenkt auf den Zielbereich geworfen wird, da es nicht aus zwei sehr unterschiedlichen Richtungen auf dieselbe Stelle an der Facette kommt.

Die genannte Lichtaustrittsfläche kann im Wesentlichen eben ausgebildet sein, ggf. aber auch eine leichte konvexe oder konkave Wölbung besitzen. In letzterem Fall kann sich der Reflektor näherungsweise rechtwinklig zu einer Tangentialebene auf die leicht gewölbte Lichtaustrittsfläche erstrecken.

Insbesondere kann die Linse rechteckig oder sechseckig ausgebildet sein oder allgemein eine polygonale Umrisskontur besitzen, um ein spaltfreies Aneinandersetzen mehrerer Linsen zum Erzeugen eines Leuchtkachelfelds zu ermöglichen. Besitzt die Linse eine solche polygonzugförmige Umrisskontur, kann der genannte Reflektor einen ebenen oder einen gerade verlaufenden, ggf. leicht rinnen- oder wallförmig gewölbten Reflektorstreifen bilden, der sich parallel zu einer geraden Umfangsseite der Linse erstrecken kann.

Die Lichteintrittsfläche an der randseitigen Schmalseite der Linse kann eine Eindellung in der randseitigen Schmalseite der Linse bilden, beispielsweise eine dom- bzw. halbdomförmige oder halbschalenförmige Ausnehmung, in deren Bereich die Lichtquelle angeordnet werden kann. Vorteilhafterweise kann der randseitige Reflektor die muldenförmige Lichteintrittsfläche randseitig verschließen und/oder umfangsseitig abdecken.

Um einen randseitigen hellen Fleck in der Lichtaustrittsfläche durch Licht, das direkt gegenüber der Lichtquelle ohne Umlenkung auf die Facetten an der Lichtaustrittsfläche austritt, zu vermeiden, kann der genannte Reflektor in Weiterbildung der Erfindung eine in die muldenförmige Lichteintrittsfläche hineinragende Reflektornase umfassen, die der Lichtquelle gegenüberliegt und/oder sich im Bereich der Hauptabstrahlachse der Lichtquelle erstreckt, um im Bereich der Hauptabstrahlrichtung der Lichtquelle abgegebenes Licht zu reflektieren.

Die Facetten des an der Rückseite der Linse vorgesehenen Facettenfelds können voneinander abweichend konturiert sein. Unabhängig hiervon können die Facetten eine konkave und/oder eine konvexe Wölbung besitzen und/oder zumindest abschnittsweise auch flach ausgebildet sein, wobei je nach Position der Facette im Facettenfeld und/oder je nach Position relativ zur Lichtquelle unterschiedliche Facettenkonturierungen realisiert sein können.

Insbesondere können die Facetten als Freiformflächen ausgebildet sein, um das auf die Facetten treffende Licht in der gewünschten Weise verteilen zu können.

Um Multischatten im zu beleuchtenden Zielbereich zumindest weitgehend zu vermeiden, sind die Facetten nach einem weiteren Aspekt der vorliegenden Erfindung derart konfiguriert, dass jede Facette, die in denselben Zielbereich strahlt, zumindest näherungsweise die gleiche Lichtverteilung im Zielbereich generiert. Durch gleiche Lichtverteilungen der sich im Zielbereich ergänzenden und/oder überlagernden Lichtkegel bzw. Strahlenbündel, die von den verschiedenen Facetten ausgehen, können Multischatten weitgehend vermieden werden.

Dabei kann eine Linse insgesamt betrachtet verschiedene Zielbereiche beleuchten und beispielsweise zwei spitzwinklig divergierende Lichtkegel bzw. Strahlenbündel abstrahlen. Bestrahlt die Linse zwei separate Zielbereiche, können alle Facetten, die in den ersten Zielbereich strahlen, dort dieselbe Lichtverteilung generieren, und alle Facetten, die in den zweiten Zielbereich strahlen, dort die im Wesentlichen gleiche Lichtverteilung erzielen.

Strahlen alle Facetten in einen Zielbereich, können alle Facetten in dem einen Zielbereich im Wesentlichen dieselbe Lichtverteilung generieren.

Aufgrund von Randerscheinungen und Fertigungstoleranzen werden nicht wirklich alle Facetten exakt dieselbe Lichtverteilung generieren. Insbesondere randseitige Facetten können eine Lichtverteilung generieren, die von der Lichtverteilung mittig angeordneter Facetten etwas abweichen kann. Von solchen Toleranz- bzw. Randerscheinungen abgesehen sind die Facetten allerdings so konfiguriert, dass alle in denselben Zielbereich strahlenden Facetten zumindest überwiegend dieselbe Lichtverteilung dort generieren.

Dabei kann das Verhältnis der in verschiedene Zielbereiche strahlenden Facetten grundsätzlich verschieden gewählt werden. Beispielsweise kann ein Drittel der Facetten in einen Zielbereich und zwei Drittel der Facetten in einen anderen Zielbereich strahlen. Vorteilhafterweise kann bei zwei Zielbereichen jedoch vorgesehen sein, dass zumindest etwa eine Hälfte der Facetten in den einen Zielbereich und die andere Hälfte der Facetten in den anderen Zielbereich strahlt. Insbesondere kann dabei vorgesehen sein, dass im Facettenfeld benachbarte Facetten in jeweils verschiedene Zielbereiche strahlen, sodass jede zweite Facette in denselben Zielbereich strahlt.

In vorteilhafter Weiterbildung der Erfindung können die Facetten derart konfiguriert sein, dass jede in denselben Zielbereich strahlende Facette den Zielbereich zumindest näherungsweise vollständig ausleuchtet und/oder sich die Lichtkegel bzw.

Strahlenbündel der in denselben Zielbereich strahlenden Facetten zumindest näherungsweise vollständig überdecken.

Die Facetten können in Weiterbildung der Erfindung jeweils einen polygonzugförmigen, insbesondere rechteckigen Umriss besitzen, wobei alternativ hierzu auch Facetten mit hexagonaler Umrillkontur vorgesehen sein können.

Um mehrere Linsen bzw. mehrere Leuchtkacheln variabel in unterschiedlichen Anordnungen aneinander setzen zu können, ohne dabei ein homogenes Erscheinungsbild zu beeinträchtigen, können in vorteilhafter Weiterbildung der Erfindung die Facetten bezüglich der Hauptachsen der jeweiligen Linse diagonal angeordnet sein. Die Facetten sind dabei nebeneinander bzw. hintereinander in mehreren Reihen angeordnet, wobei die Reihen diagonal verlaufen, das heißt, dass sich die Reihenachsen diagonal zu den Hauptachsen der Linsenumrisskontur erstrecken.

Insbesondere können Facetten mit rechteckiger, insbesondere quadratischer Umrisskontur in Reihen nebeneinander bzw. hintereinander angeordnet sein, wobei sich die Umrisskanten der rechteckigen bzw. quadratischen Facetten parallel zum diagonalen Verlauf der Reihenachsen erstrecken.

Durch eine solche diagonale Anordnung der Facetten können rechteckige oder quadratische Linsen bzw. Leuchtkacheln wahlweise parallel aneinander oder im rechten Winkel zueinander nach Art eines Ls angeordnet werden. Bei beiden Anordnungen verlaufen die Facettenreihen gleichermaßen über die Modulgrenzen hinweg in der gleichen Richtung, sodass ein über die einzelnen Linsen hinweg homogen erscheinendes Facettenfeld und damit ein insgesamt homogenes Erscheinungsbild der Leuchtkachel-Matrix erreicht wird.

Die Linse kann mehr als 20 oder mehr als 50 oder auch mehr als 100 Facetten aufweisen, wobei die Facetten in mehr als 5 oder mehr als 10 oder auch mehr als 20 Reihen nebeneinander matrixartig verteilt sein können.

Die facettierte Rückseite der Linsen kann - bei Betrachtung einer auf den Facetten liegenden Hüllfläche - insgesamt eben und/oder zumindest abschnittsweise leicht gewölbt ausgebildet sein. Insbesondere kann eine rückseitige Hüllfläche der Linse leicht konvex, insbesondere schalenartig gewölbt sein.

Die der facettierten Rückseite gegenüberliegende Lichtaustrittsfläche der Linse kann in vorteilhafter Weiterbildung der Erfindung glatt ausgebildet sein, das heißt ohne Facettierung oder andere Oberflächenstrukturierung ausgebildet sein.

Die Linse kann insgesamt betrachtet sehr dünn ausgebildet sein und beispielsweise eine maximale Dicke von weniger als 3 cm oder weniger als 2 cm oder sogar weniger als 1 cm besitzen. Eine solche geringe Dicke ermöglicht eine Wand- oder Deckenmontage, die auch bei Aufputzausführung nicht aufträgt. Gleichzeitig kann bei versenktem Einbau beispielsweise in ein Decken- oder Wandpanel eine Integration auch in dünne Panele erzielt werden, ohne tiefe Aussparungen zu benötigen. Natürlich ist auch eine hängende oder in anderer Weise freistehende Montage beispielsweise an einem Tragarm möglich, wobei auch hier die dünne Ausbildung der Linsen zu einem grazilen, leichten Erscheinungsbild der Leuchte beiträgt.

Um trotz seitlicher, randseitiger Lichteinstrahlung eine gleichmäßige Verteilung des eingeleiteten Lichts zu erleichtern, besitzt die Linse eine sich verändernde Dicke, die von der Lichteintrittsfläche zur gegenüberliegenden Schmalseite der Linse abnimmt. Beispielsweise kann die Dicke der Linse von einem Rand zu einem gegenüberliegenden Rand hin kontinuierlich abnehmen oder zunächst kontinuierlich abnehmen und dann wieder zunehmen oder umgekehrt zunächst kontinuierlich zunehmen und dann wieder abnehmen. Vorteilhafterweise besitzt die Linse in Querschnitten betrachtet einen insgesamt harmonischen Verlauf der Linsendicke.

Insbesondere kann die Linsendicke von der Linsenschmalseite, an der die Lichteintrittsfläche angeordnet ist, zur gegenüberliegenden Schmalseite der Linse hin kontinuierlich abnehmen, sodass die Linse von der Lichteintrittsfläche ausgehend immer dünner wird.

Unabhängig hiervon kann die Linsendicke auch in einem Querschnitt parallel oder tangential zu dem Linsenrand, an dem die Lichtquelle angeordnet ist, vom Zentrum der Linse aus zu den Rändern hin dünner werden.

Insbesondere kann die Linse im Bereich der Lichteintrittsfläche eine maximale Dicke besitzen und sich von diesem Bereich ausgehend in alle Richtungen zunehmend ausdünnen.

Unabhängig hiervon kann das Verhältnis einer Maximaldicke zu einer Minimaldicke im Bereich von 1:2 oder evtl. 1:3 betragen. Vorzugsweise kann die minimale Dicke zumindest 40% oder zumindest 60% der maximalen Dicke betragen.

Die Linse kann dazu ausgebildet sein, von der Lichtaustrittsfläche spitzwinklig schleifend abzustrahlen und/oder einen Wallwasher bilden, der bei naher Anordnung an einer Wand dennoch die Wand bzw. einen großen Wandabschnitt etwa von der Höhe des Wallwashers ausgehend bis zum Boden gleichmäßig ausleuchtet. Insbesondere kann die Linse stark schleifend abstrahlen, um beispielsweise bei deckenbündigem Einbau bzw. näherungsweise deckenbündiger Anordnung die zu beleuchtende Wand dennoch bis zur Decke auszuleuchten.

Alternativ kann die Linse aber auch andere Abstrahlcharakteristiken verwirklichen, beispielsweise zwei spitzwinklig divergierende Strahlenbündel abstrahlen, die beispielsweise eine sogenannte Batwing-Lichtverteilung realisieren können.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Darstellung einer Leuchte, die aus mehreren Leuchtenmodulen mit jeweils einer flachen, flächig abstrahlenden Linse zusammengesetzt ist, wobei eines der Leuchtenmodule in einer Explosionsdarstellung gezeigt ist,
- Fig. 2:: eine perspektivische Darstellung einer einzelnen Linse der Leuchte aus Fig. 1, die die Lichtaustrittsfläche, die durch die Linse hinweg sichtbaren Facetten auf der Linsenrückseite und die Einfassung der Linse zeigt,
- Fig. 3:: eine Schnittansicht des Leuchtenmoduls der Leuchte aus den vorhergehenden Figuren, die die randseitige Lichteintrittsfläche, die dort positionierte Lichtquelle und den die muldenförmige Lichteintrittsfläche verschließenden Reflektor sowie die Strahlengänge durch die Linse hindurch zeigt,
- Fig. 4:: eine Draufsicht auf die Linse der Leuchte aus den vorhergehenden Figuren, die die diagonale Anordnung der Facetten an der Linsenrückseite zeigt, wobei bei der gezeigten Ausführung von den Facetten zwei separate Zielbereiche bestrahlt werden und eine batwingartige Lichtverteilung generiert wird,
- Fig. 5:: eine Draufsicht auf ein Anordnungsmuster mehrerer Leuchtenmodule, wobei die rechteckigen Linsen teilweise parallel zueinander und teilweise rechtwinklig zueinander angeordnet sind und die diagonale Anordnung der Facetten über die verschiedenen Linsen hinweg verlaufen,
- Fig. 6:: eine Explosionsdarstellung einer Leuchte mit verschiedenen jeweils rechteckigen Leuchtenmodulen, wobei ein Teil der Leuchtenmodule eine jeweils zweibündelige, insbesondere batwingartige Lichtverteilung generiert und ein anderer Teil der Leuchtenmodule eine Wallwasher-Lichtverteilung generiert,
- Fig. 7:: eine ausschnittsweise, perspektivische Darstellung des die Lichteintrittsfläche einer Linse einfassenden Reflektors, die die in die muldenförmige Lichteintrittsfläche eingreifende Reflektornase zeigt, die sich gegenüber der Lichtquelle erstreckt, und
- Fig. 8:: eine schematische Darstellung verschiedener Anordnungsoptionen einer oder mehrerer Leuchtenmodule mit einer Linse aus den vorhergehenden Figuren.

Wie die Figuren zeigen, kann die Leuchte 1 mehrere Linsen 2 umfassen, die jeweils eine rechteckige Umrisskontur besitzen können.

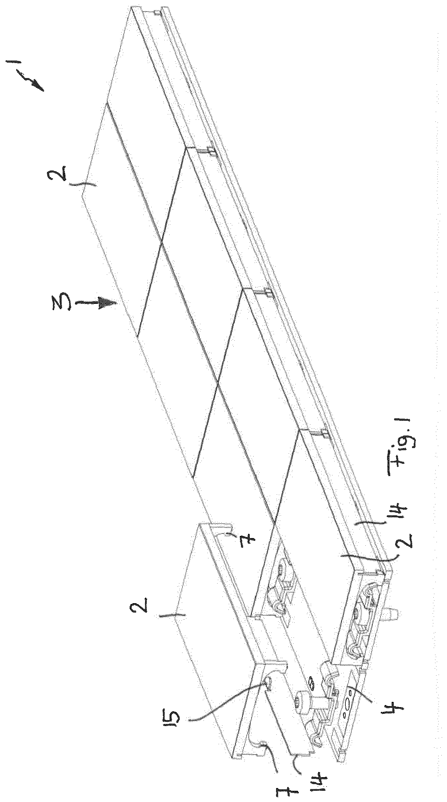

Die Linsen 2 können im Wesentlichen spaltfrei aneinander gesetzt werden und ein matrixartiges Linsenfeld 3 bilden, wobei die Linsen 2 mit ihrer Lichtaustrittsseite im Wesentlichen in derselben Ebene angeordnet sein können, vgl. Figur 1.

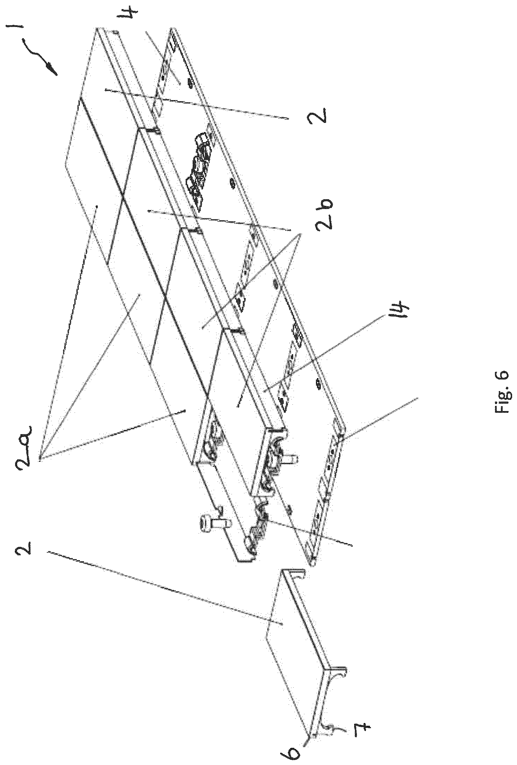

Wie Figur 6 zeigt, können die Linsen 3 dabei auf einem gemeinsamen Träger 4 montiert sein, der eine Versorgungs- bzw. Leiterplatte umfassen kann, auf der für jede Linse 2 eine Lichtquelle 5 angeordnet und mit Strom versorgt werden kann. Als Lichtquelle 5 kann insbesondere eine LED oder ein LED-Cluster umfassend verschiedenfarbige LED-Bausteine vorgesehen sein, die von der Trägerplatte mit Strom versorgt und ggf. auch gekühlt werden kann.

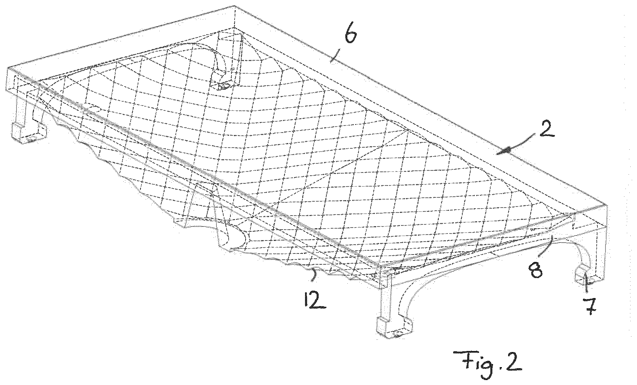

Wie Figur 2 und auch Figur 1 verdeutlicht, kann dabei jede Linse 2 randseitig von einer Einfassung 6 eingefasst bzw. gehalten sein, wobei an der Einfassung 6 Halteelemente 7 zum Halten der Linse 2 an dem Träger 4 vorgesehen sein können. Die Einfassung 6 kann insbesondere einen schmalen, randseitig an der Linse 2 angeordneten Trägersteg 8 umfassen, der die flache, kachel- bzw. flunderartige Linse 2 randseitig einfasst. Die genannten Haltelemente 7 können zur Rückseite der Linse 2 vorspringen und mit dem Trägersteg 8 verbunden sein, wobei unabhängig hiervon die genannten Halteelemente 7 Aufstandsfüße bilden können, mit denen die Linsen 2 an dem Träger 4, insbesondere der Trägerplatte aufstehen und damit verbunden werden können. Dabei können Schnappprofile oder auch Schraubverbindungen oder eine Klebeverbindung vorgesehen sein. Wie Figur 1 zeigt, können die Linsen 2 mittels der genannten Einfassung 6 und den davon vorstehenden Halteelementen 7 zu einem Linsenfeld aneinandergesetzt und auf der Trägerplatte befestigt werden. Beispielsweise kann an jeder Ecke der viereckigen Linse 2 ein Halteelement 7 vorstehen.

Durch die schmalen, leistenförmigen Einfassungen 6 können die Linsen 2 nahtlos aneinandergesetzt bzw. durch minimalen Abstand voneinander getrennt angeordnet werden.

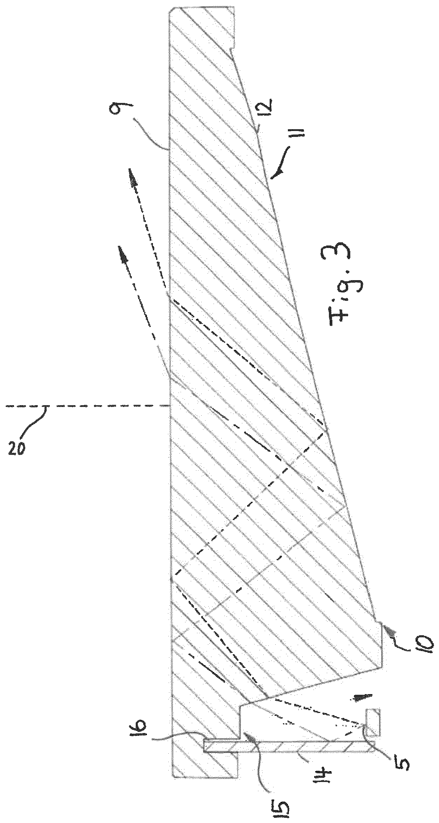

Wie die Figuren 2 und 3 zeigen, sind die Linsen 2 näherungsweise plattenförmig bzw. kachel- oder flunderartig flachgedrückt ausgebildet, sodass die Linsen 2 zwei gegenüberliegende, relativ großflächige Flachseiten besitzen, die umfangsseitig durch eine Schmalseite - im Falle von viereckigen Linsen durch 4 Schmalseiten - miteinander verbunden sind.

Eine der genannten, großflächigen Flachseiten bildet die Lichtaustrittsfläche 9 der Linse 2, wobei die genannte Lichtaustrittsfläche 9 glatt und eben ausgebildet sein kann.

Die der Lichtaustrittsfläche 9 gegenüberliegende Rückseite 10 der Linse 2, das heißt die andere große Flachseite, ist mit einem Facettenfeld 11 umfassend eine Vielzahl von lichtumlenkenden Facetten 12 versehen, an denen in die Linse 2 eingeleitetes Licht umgelenkt und zur Lichtaustrittsfläche 9 geworfen wird. Das genannte Facettenfeld 11 kann im Wesentlichen die gesamte Rückseite 10 der Linse 12 bedecken.

Die einzelnen Facetten 12 können als Oberflächenkonturierung in das Material der Linse 2 eingearbeitet sein und konvex gewölbte Erhöhungen und/oder konkav gewölbte Eindellungen umfassen, wobei auch abschnittsweise gemischte Facettenformen möglich sind. Die Facetten 12 können auch zumindest abschnittsweise flach ausgebildet sein.

Wie Figur 3 zeigt, können über das Facettenfeld 11 verteilt unterschiedlich konturierte Facetten 12 vorgesehen sein, beispielsweise unterschiedlich stark und/oder tief bzw. hoch ausgewölbte Facetten 12 vorgesehen sein. Die Facetten 12 können in verschiedenen Bereichen des Facettenfelds 11 unterschiedliche Wölbungen aufweisen.

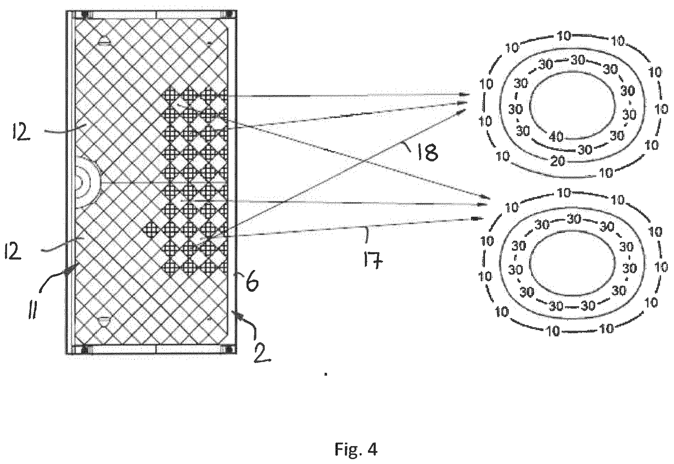

Wie Figur 4 zeigt, können die Facetten 12 in der Draufsicht betrachtet etwa gleich groß ausgebildet sein und/oder im Wesentlichen die gleiche Umrisskonturierung besitzen. Insbesondere können viereckige, beispielsweise quadratische Umrisse für die Facetten 12 gewählt sein, sodass sich die Facetten 12 im Wesentlichen nahtlos aneinanderreihen können.

Vorteilhafterweise können die Facetten 12 bezüglich der Umrisskontur der Linse 2 diagonal angeordnet sein. Die Facetten 12 sind hintereinander bzw. nebeneinander in Reihen angeordnet, wobei sich die Längsrichtung der Reihen diagonal zu den Hauptachsen der rechteckigen Linse 2 erstrecken. Insbesondere können die Reihen unter einem Winkel von 45° zu den beiden Hauptachsen, das heißt der Längsachse und der Querachse, der Linse 2 angeordnet sein, vgl. Figur 4. Mit anderen Worten, kann das Facettenfeld 11 schachbrettartig ausgebildet sein.

Wie die Figur 2 und Figur 3 zeigen, kann eine auf dem Facettenfeld 2 liegende Hüllfläche der Rückseite 10 der Linse 2 leicht schüsselartig, konvex gewölbt sein, wobei die genannte Rückseite 10 aber auch flache Abschnitte aufweisen kann.

Wie die Figuren zeigen, ist die Linse 2 insgesamt sehr dünn ausgebildet und kann beispielsweise eine maximale Dicke von weniger als 1 cm besitzen.

Wie Figur 2, 3 und 5 zeigen, ist die Lichtquelle 5 der Linse 2 an deren Randseite angeordnet. Eine der Schmalseiten der Linse 2 kann eine muldenförmige bzw. halbdomförmig eingedellte Lichteintrittsfläche 13 besitzen, in deren Bereich die Lichtquelle 5 angeordnet ist. Vorteilhafterweise kann die Lichtquelle 5 im Bereich der Rückseite 10 der Linse 2 angeordnet sein und eine Hauptabstrahlrichtung auf die Lichtaustrittsfläche 9 zu, insbesondere im Wesentlichen senkrecht zur Lichtaustrittsfläche 9 aufweisen. Erfindungsgemäß ist die Lichtquelle 5 mit ihrer Hauptabstrahrichtung im wesentlichen parallel zur Hauptachse 20 der Linse 2, die senkrecht auf die Lichtaustrittsfläche 9 steht, ausgerichtet.

Wie Figur 3 zeigt, kann die Lichteintrittsfläche 13 eine näherungsweise halbzylindrische bzw. halbglockenförmige Eindellung in der Schmalseite der Linse 2 bilden.

Die an sich zur Schmalseite bzw. Umgebung hin offene Lichteintrittsfläche 13 kann vorteilhafterweise von einem Reflektor 14 eingefasst oder verschlossen sein, der sich entlang der Schmalseite der Linse 2 erstrecken kann. Der genannte Reflektor 14 ist gemäß der Erfindung im Wesentlichen parallel zur Hauptabstrahlrichtung der Lichtquelle 5 angeordnet und bildet ein zumindest näherungsweise ebenes Reflektorpanel. Insbesondere kann der Reflektor 14 bei rechteckiger oder polygonzugartiger Konturierung der Linse 2 ein ebenes Reflektorblech bilden.

Alternativ oder zusätzlich wäre es auch möglich (nicht gemäß der Erfindung), dem Reflektor 14 abschnittsweise oder insgesamt eine rinnenförmige Konturierung zu geben, wobei der Reflektor 14 in diesem Fall bauchig zur Lichteintrittsfläche 13 oder bauchig von der Lichteintrittsfläche 13 weg angeordnet sein kann.

Bei der gezeigten Ausrichtung des Reflektors 14 parallel zur Linsenhauptachse 20 ist auch die Lichtquelle 5 mit ihrer Hauptabstrahlrichtung parallel zur Linsenhauptachse ausgerichtet. Grundsätzlich wäre es aber auch möglich (nicht gemäß der Erfindung), die Anordung sozusagen umzudrehen bzw. um etwa 90° zu verkippen. In diesem Fall würde sich der Reflektor 14 etwa senkrecht zur Linsenhauptachse, bspw. etwa parallel zur Lichtaustrittsfläche etwa an der Unter- bzw. Rückseite der Linse erstrecken und die Lichtquelle 5 zwischen sich und der Lichteintrittsfläche 13 sandwhichartig einfassen. Die Lichtquelle 5 wäre dabei mit ihrer Hauptabstrahlrichtung im wesentlichen senkrecht zur Linsenhauptachse 20 und/oder parallel zur Lichtaustrittsfläche. In beiden Fällen wird der von der Lichtquelle 5 bestrahlte Halbraum vom parallel angeordneten Reflektor 14 auf einen Viertelraum verjüngt, der auch die Lichteintrittsfläche ausgerichtet ist.

Wie Figur 3 zeigt, wirft der Reflektor 14 von der Lichtquelle 5 her kommendes Licht auf die Linse 2, insbesondere auf deren Lichteintrittsfläche 13, sodass sich das in die Lichteintrittsfläche 13 eintretende Licht sozusagen verdoppelt bzw. zumindest näherungsweise verdoppelt. Wird als Lichtquelle 5 eine LED verwendet, kann diese bei Anordnung auf der Trägerplatte bzw. bei Anordnung mit ihrer Hauptabstrahlrichtung senkrecht zur Lichtaustrittsfläche 9 der Linse 2 als Halbraumstrahler an sich nur die Hälfte ihres Lichts auf die Lichteintrittsfläche 13 der Linse 2 werfen, sodass die andere Hälfte ohne den Reflektor 14 sozusagen verloren gehen würde. Durch den genannten Reflektor 14 kann zumindest ein großer Teil des von der Lichteintrittsfläche 13 weggestrahlten Lichts der Lichtquelle 5 umgelenkt und zurück auf die Lichteintrittsfläche 13 geworfen werden.

Wie Figur 3 zeigt, ergeben sich im Wesentlichen drei Gruppen von Strahlengängen: Ein erster Strahlengang trifft direkt von der Lichtquelle 5 ausgehend auf die Lichteintrittsfläche 13, wird dort gebeugt und trifft auf die Lichtaustrittsfläche 9 oder ggf. auch auf das Facettenfeld 11. Wie Figur 3 zeigt, wird der auf die Lichtaustrittsfläche 9 treffende Strahlengang dort durch Totalreflexion umgelenkt und auf das Facettenfeld 11 gelenkt, wo der Strahl erneut umgelenkt und zurück auf die Lichtaustrittsfläche 9 geworfen wird, von der aus der Lichtstrahl dann unter entsprechender Auslenkung austreten kann.

Eine zweite Gruppe von Strahlengängen trifft von der Lichtquelle 5 ausgehend zunächst auf den Reflektor 14 und wird von diesem auf die Lichteintrittsfläche 13 geworfen, von wo aus der Strahlengang den zuvor beschriebenen weiteren Verlauf nehmen kann.

Eine dritte Gruppe von Strahlen, die im Wesentlichen senkrecht oder nahezu senkrecht zur Lichtaustrittsfläche 9 aus der Lichtquelle 5 austreten, werden von einer Reflektornase 15 zurückgeworfen, um nicht direkt an der Lichtaustrittsfläche 9 auszutreten.

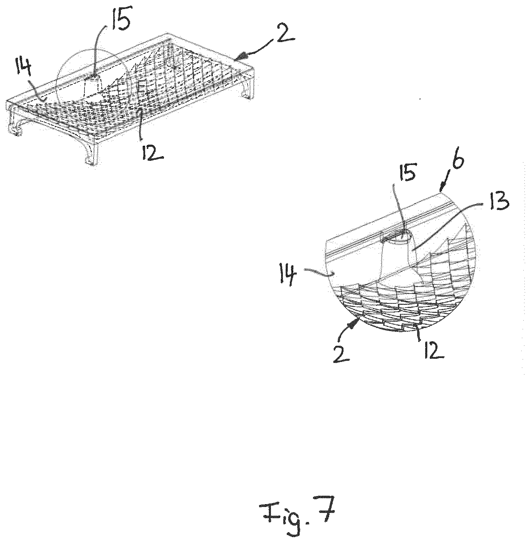

Wie Figur 7 zeigt, kann die genannte Reflektornase 15 einen lappenförmigen Vorsprung bilden, der vom Hauptkorpus des Reflektors 14 aus zur Lichteintrittsfläche 13 vorspringt und/oder sich in die muldenförmige Lichteintrittsfläche 13 hinein erstreckt, sodass die Reflektornase 15 die Hauptabstrahlrichtung der Lichtquelle 5 und einen kreisförmigen Bereich darum herum sozusagen blockiert und um die Hauptabstrahlrichtung herum abgestrahlte Lichtstrahlen zurückwirft. Hierdurch können hell leuchtende Flecken an der Lichtaustrittsfläche unmittelbar gegenüber der Lichtquelle 5 vermieden werden.

Wie die Figuren 1, 2 und insbesondere 3 verdeutlichen, kann die Linse 2 sich von der Lichteintrittsfläche 13 ausgehend verdünnen, wobei die Dicke der Linse 2 vom Bereich der Lichteintrittsfläche 13 aus in allen Richtungen abnehmen kann. Eine minimale Dicke der Linse 2 auf der der Lichtquelle 5 abgewandten Schmalseite der Linse 2 kann 40 - 60 % oder 30 bis 70 % der maximalen Dicke der Linse 2 im Bereich der Lichteintrittsfläche 13 betragen.

Der genannte Reflektor 14 kann einen Teil der randseitigen Einfassung 6 der Linse 2 bilden oder damit fest verbunden sein. Alternativ kann der Reflektor 14 auch separat von der Einfassung 6 ausgebildet sein und beispielsweise in einer Aufnahmetasche 16 der Linse 2 aufgenommen und damit verbunden sein, vgl. Figur 3.

Wie Figur 4 verdeutlicht, kann das von den Facetten 12 umgelenkte Licht auf zwei separate bzw. benachbarte Zielbereiche 17 und 18 verteilt werden, beispielsweise in Form einer batwingartigen Lichtstärkeverteilung oder in Form zweier Strahlenbündel, die zueinander spitzwinklig geneigt sind und von der Linse 2 ihren Ausgang nehmen. Grundsätzlich ist es aber auch möglich, nur einen gemeinsamen Zielbereich zu beleuchten.

Vorteilhafterweise sind die Facetten 12 dabei derart ausgebildet, dass jede in denselben Zielbereich 17 oder 18 strahlende Facette 12 im Zielbereich 17 oder 18 eine zumindest näherungsweise gleiche Lichtstärkeverteilung generiert, um im entsprechenden Zielbereich die Multischatten-Problematik zu vermeiden. Insbesondere kann jede in denselben Zielbereich 17 oder 18 strahlende Facette 12 im Wesentlichen den gesamten Zielbereich ausleuchten, sodass sich die von den Facetten ausgehenden Strahlenbündel zumindest näherungsweise vollständig überdecken.

Wie Figur 4 verdeutlicht, können die in verschiedenen Zielbereichen 17 und 18 strahlenden Facetten 12 dabei abwechselnd angeordnet sein. Betrachtet man die verschiedenen Reihen in den Diagonalrichtungen, kann jede zweite Facette in den ersten Zielbereich und jede dazwischenliegende Facette in den zweiten Zielbereich strahlen.

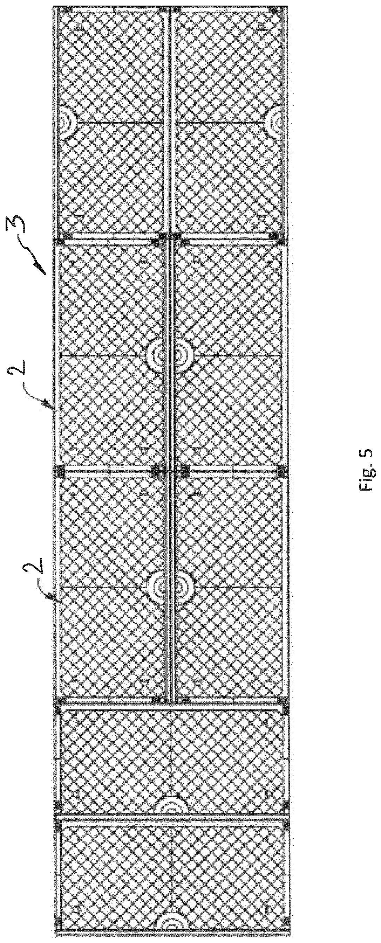

Wie Figur 5 zeigt, können die Linsen 2 sowohl parallel nebeneinander als auch rechtwinklig zueinander in einer Anordnung nach Art eines L aneinander gesetzt werden. Durch die diagonale Anordnung der Facetten 12 ergibt sich unabhängig von der parallelen oder rechtwinkligen Anordnung ein über die Schnittstellen hinwegverlaufendes Facettenmuster, welches die Lichtaustrittsflächen 9 der Linsen 2 gleichmäßig leuchtend erscheinen lässt.

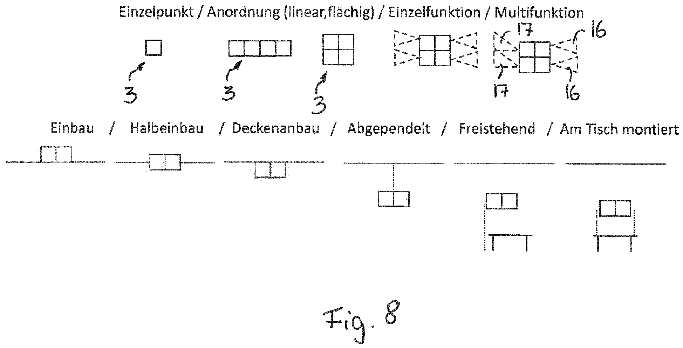

Wie Figur 8 zeigt, weil die Leuchte 1 nur eine einzelne Linse 2 oder auch mehrere Linsen 2 umfassen, wobei mehrere Linsen 2 in verschiedenen Anordnungen nebeneinander oder hintereinander oder quer zueinander angeordnet sein können.

Unabhängig von der Anzahl und der Anordnung der Linsen 2 zueinander, kann die Leuchte 1 versenkt oder teilversenkt in einem Wand- oder Deckenpanel oder nach Art einer Aufputzleuchte montiert sein. Alternativ zu einer Wand- oder Deckenmontage kann die Leuchte 1 auch pendelnd aufgehängt oder an einem Leuchtenträger bzw. -mast montiert sein.

## Patentansprüche

1. Leuchte mit einer Lichtquelle (5) sowie einer flachen, kachel- oder flunderartigen Linse (2) mit einer Lichteintrittsfläche (13) zum Einfangen des Lichts der Lichtquelle (5) und einer Lichtaustrittsfläche (9) zum Verteilen des eingefangenen Lichts auf einen Zielbereich (17, 18), wobei die Linse (2) auf einer die Lichtaustrittsfläche (9) gegenüberliegenden Rückseite (10) ein Facettenfeld (11) mit lichtreflektierenden Facetten (12) umfasst und die Lichteintrittsfläche (13) an einer Schmalseite der Linse (2) zwischen der Lichtaustrittsfläche (9) und der facettierten Rückseite (10) vorgesehen ist, wobei die Lichtquelle (5) randseitig von der Linse (2) zwischen der Lichteintrittsfläche (13) der Linse (2) und einem seitlichen, die Linse (2) randseitig einfassenden Reflektor (14) angeordnet ist, sodass ein Teil des von der Lichtquelle (5) abgegebenen Lichts direkt auf die Lichteintrittsfläche (13) trifft und ein anderer Teil des von der Lichtquelle (5) abgegebenen Lichts von dem Reflektor (14) umgelenkt auf die Lichteintrittsfläche (13) trifft, wobei der Reflektor (14) ein zumindest näherungsweise ebenes Reflektorpanel bildet, **dadurch gekennzeichnet, dass** die Lichtquelle (5) mit ihrer Hauptabstrahlrichtung etwa parallel zur Linsenhauptachse (20), die senkrecht zur Lichtaustrittsfläche (9) ist, ausgerichtet ist und das Reflektorpanel im Wesentlichen parallel zur Hauptabstrahlrichtung der Lichtquelle (5) angeordnet ist und den von der Lichtquelle (5) bestrahlten Halbraum auf einen etwa Viertelraum verjüngt, der im Wesentlichen vollständig der Lichteintrittsfläche (13) zugewandt ist, wobei die Linse (2) eine sich über die Lichtaustrittsfläche (9) verändernde Dicke besitzt, die vom Bereich der Lichteintrittsfläche (13) aus zumindest zur gegenüberliegenden Schmalseite der Linse (2) hin abnimmt.

2. Leuchte nach dem vorhergehenden Anspruch, wobei der Reflektor (14) derart angeordnet und ausgebildet ist, dass die Lichtaustrittsfläche (9) virtuell gespiegelt wird und die von der Lichtquelle (5) auf den Reflektor (14) treffenden Lichtstrahlen so über die Lichteintrittsfläche (13) in die Linse (2) eingeleitet und ggf. unter Totalreflexion an der Lichtaustrittsfläche (9) auf die facettierte Rückseite (10) gelenkt werden wie die von der Lichtquelle (5) direkt auf die Lichteintrittsfläche (13) treffenden Lichtstrahlen.

3. Leuchte nach einem der vorhergehenden Ansprüche, wobei die Lichtquelle (5) und die Lichteintrittsfläche (13) derart ausgebildet und zueinander angeordnet sind, dass alle von der Lichtquelle (5) am Reflektor (14) vorbei direkt auf die Lichteintrittsfläche (13) treffenden Lichtstrahlen erst auf die Lichtaustrittsfläche (9) gelenkt werden, bevor sie von dort durch Totalreflexion umgelenkt auf die facettierte Rückseite (10) geleitet werden.

4. Leuchte nach einem der vorhergehenden Ansprüche, wobei der seitliche Reflektor (14) die muldenförmige Lichteintrittsfläche (13) randseitig verschließt und/oder abdeckt.

5. Leuchte nach einem der vorhergehenden Ansprüche, wobei der seitliche Reflektor (14) eine in die muldenförmige Lichteintrittsfläche (13) hineinragende Reflektornase (15) besitzt, die der Lichtquelle (5) gegenüberliegt und/oder sich in der Hauptabstrahlrichtung der Lichtquelle (5) erstreckt.

6. Leuchte nach einem der vorhergehenden Ansprüche, wobei der Reflektor (14) an der Linse (2) befestigt und/oder an einer die Linse (2) seitlich einfassenden Einfassung (6) befestigt ist, die Halteelemente (7) zum Halten der Linse (2) aufweist.

7. Leuchte nach einem der vorhergehenden Ansprüche, wobei jede der Facetten (12), die in denselben Zielbereich (17, 18) strahlt, dazu ausgebildet ist, im Zielbereich (17, 18) zumindest näherungsweise die gleiche Lichtverteilung im Zielbereich zu generieren.

8. Leuchte nach dem vorhergehenden Anspruch, wobei jede der in denselben Zielbereich (17, 18) strahlenden Facetten (12) dazu ausgebildet ist, jeweils im Wesentlichen den gesamten Zielbereich (17, 18) zu beleuchten, und/oder zumindest die Mehrheit aller in denselben Zielbereich (17, 18) strahlenden Facetten (12) Strahlenbündel generieren, die einander im Zielbereich (17, 18) zumindest näherungsweise vollständig überlappen.

9. Leuchte nach einem der vorhergehenden Ansprüche, wobei die Linse (2) dazu ausgebildet ist, mehrere Zielbereiche (17, 18) zu bestrahlen, wobei die in die verschiedenen Zielbereiche (17, 18) strahlenden Facetten (12) im Wesentlichen über das gesamte Facettenfeld (11) verteilt angeordnet sind und/oder die in verschiedene Zielbereiche (17, 18) strahlenden Facetten (12) abwechselnd nebeneinander angeordnet sind.

10. Leuchte nach einem der vorhergehenden Ansprüche, wobei mehr als 20 oder mehr als 50 oder mehr als 100 Facetten in mehr als 5 oder mehr als 10 oder mehr als 20 Reihen nebeneinander oder hintereinander angeordnet sind, und/oder das Facettenfeld (11) mehrere diagonal zu den Hauptachsen der Linse (2) angeordnete Reihen von Facetten umfasst, die rechteckige, insbesondere quadratische, Umrisskonturen besitzen und mit gegenüberliegenden Umrisskanten jeweils diagonal zu den Hauptachsen der Linsenumrisskontur angeordnet sind.

11. Leuchte nach einem der vorhergehenden Ansprüche, wobei die Facetten (12) Freiformflächen-Facetten bilden und/oder zumindest abschnittsweise konvex und/oder konkav gewölbt und/oder zumindest abschnittsweise flach ausgebildet sind.

12. Leuchte nach einem der vorhergehenden Ansprüche, wobei Facetten (12) in verschiedenen Abschnitten des Facettenfelds (11) unterschiedlich starke und/oder unterschiedlich ausgebildete Wölbungen besitzen und/oder eine auf den Facetten (12) liegende Hüllfläche der Rückseite (10) der Linse (2) eine konvexe Wölbung, insbesondere eine leicht schüsselartige Wölbung, besitzt.

13. Leuchte nach einem der vorhergehenden Ansprüche, wobei die sich über die Lichtaustrittsfläche (9) verändernde Dicke der Linse (2) vom Bereich der Lichteintrittsfläche (13) aus zu allen Seiten hin abnimmt, insbesondere kontinuierlich, stetig abnimmt, wobei die Linse (2) eine minimale Dicke vorzugsweise im Bereich von 20 bis 50% oder 30 bis 70 % oder 40 bis 60 % einer maximalen Dicke der Linse (2) besitzt.

14. Leuchte nach einem der vorhergehenden Ansprüche, wobei die Lichtaustrittsfläche (9) glatt ausgebildet ist.

15. Leuchte nach einem der vorhergehenden Ansprüche, wobei mehrere Linsen (2) nebeneinander angeordnet, insbesondere mit ihren Lichtaustrittsflächen (9) in einer gemeinsamen Ebene angeordnet sind, wobei verschiedene Linsen (2) verschiedene Zielbereiche (17, 18) bestrahlen und/oder verschiedene Lichtverteilungscharakteristiken, insbesondere einerseits eine batwingartige Lichtverteilungscharakteristik und andererseits eine schleifende Wallwasher-Abstrahlcharakteristik, besitzen.

## Claims

1. Lamp with a light source (5) and a flat, tile- or flounder-like lens (2) with a light entry surface (13) for capturing the light of the light source (5) and a light exit surface (9) for distributing the captured light onto a target region (17, 18), wherein the lens (2) comprises, on a rear side (10) opposing the light exit surface (9), a facet field (11) with light-reflecting facets (12) and the light entry surface (13) is provided on a narrow side of the lens (2) between the light exit surface (9) and the faceted rear side (10), wherein the light source (5) is arranged at the edge of the lens (2) between the light entry surface (13) of the lens (2) and a lateral reflector (14) enclosing the lens (2) at the edge so that a portion of the light emitted by the light source (5) falls directly onto the light entry surface (13) and another portion of the light emitted by the light source (5) falls deflected by the reflector (14) onto the light entry surface (13), wherein the reflector (14) forms an at least approximately flat reflector panel, **characterised in that** the light source (5) is oriented with its main radiation direction approximately parallel to the lens main axis (20), which is perpendicular to the light exit surface (9), and the reflector panel is arranged substantially parallel to the main radiation direction of the light source (5) and narrows the half-space irradiated by the light source (5) to approximately a quarter space, which substantially completely faces the light entry surface (13), wherein the lens (2) has a thickness that varies over the light exit surface (9) and decreases from the region of the light entry surface (13) at least towards the opposing narrow side of the lens (2).

2. Lamp according to the preceding claim, wherein the reflector (14) is arranged and designed in such a way that the light exit surface (9) is virtually reflected and the light beams from the light source (5) falling onto the reflector (14) are introduced into the lens (2) via the light entry surface (13) and directed if applicable with total reflection at the light exit surface (9) onto the faceted rear side (10) in such a way as the light beams from the light source (5) directly falling onto the light entry surface (13).

3. Lamp according to one of the preceding claims, wherein the light source (5) and the light entry surface (13) are designed and arranged in relation to one another in such a way that all light beams from the light source (5) falling directly onto the light entry surface (13) past the reflector (14) are directed first onto the light exit surface (9) before they are routed from there deflected by total reflection onto the faceted rear side (10).

4. Lamp according to any one of the preceding claims, wherein the lateral reflector (14) closes and/or covers the trough-like light entry surface (13) at the edge.

5. Lamp according to any one of the preceding claims, wherein the lateral reflector (14) has a reflector nose (15) protruding into the trough-like light entry surface (13), which nose lies opposite the light source (5) and/or extends in the main radiation direction of the light source (5).

6. Lamp according to any one of the preceding claims, wherein the reflector (14) is attached to the lens (2) and/or is attached to a surround (6) laterally enclosing the lens (2), which surround has retaining elements (7) for holding the lens (2).

7. Lamp according to any one of the preceding claims, wherein each of the facets (12) that radiates into the same target region (17, 18) is designed to generate in the target region (17, 18) at least approximately the same light distribution in the target region.

8. Lamp according to the preceding claim, wherein each of the facets (12) radiating into the same target region (17, 18) is designed to illuminate substantially the entire target region (17, 18) respectively, and/or at least the majority of all facets (12) radiating into the same target region (17, 18) generate beams of rays, which at least approximately completely overlap one another in the target region (17, 18).

9. Lamp according to any one of the preceding claims, wherein the lens (2) is designed to irradiate a plurality of target regions (17, 18), wherein the facets (12) radiating into the different target regions (17, 18) are arranged distributed substantially over the entire facet field (11) and/or the facets (12) radiating into different target regions (17, 18) are arranged alternating adjacent to one another.

10. Lamp according to any one of the preceding claims, wherein more than 20 or more than 50 or more than 100 facets are arranged adjacent to or behind one another in more than 5 or more than 10 or more than 20 rows, and/or the facet field (11) comprises a plurality of rows of facets arranged diagonally to the main axes of the lens (2), which facets have rectangular, in particular square, contours and are arranged with opposing contour edges respectively diagonally to the main axes of the lens contour.

11. Lamp according to any one of the preceding claims, wherein the facets (12) form freeform surface facets and/or are designed convex and/or concave at least in sections and/or are designed flat at least in sections.

12. Lamp according to any one of the preceding claims, wherein facets (12) have curvatures of different thickness and/or differently formed curvatures in different sections of the facet field (11) and/or an enveloping surface of the rear side (10) of the lens (2) lying on the facets (12) has a convex curvature, in particular a slightly dished curvature.

13. Lamp according to any one of the preceding claims, wherein the thickness of the lens (2), which thickness varies over the light exit surface (9), decreases from the region of the light entry surface (13) outwards towards all sides, in particular steadily decreases continuously, wherein the lens (2) has a minimal thickness preferably in the range of 20 to 50% or 30 to 70% or 40 to 60% of a maximal thickness of the lens (2).

14. Lamp according to any one of the preceding claims, wherein the light exit surface (9) is formed smooth.

15. Lamp according to any one of the preceding claims, wherein a plurality of lenses (2) are arranged adjacent to one another, in particular are arranged with their light exit surfaces (9) in a common plane, wherein different lenses (2) irradiate different target regions (17, 18) and/or have different light distribution characteristics, in particular a batwing-like light distribution characteristic on the one hand and a razing wall washer irradiation characteristic on the other hand.

## Revendications

1. Luminaire avec une source lumineuse (5) ainsi qu'une lentille (2) plate, en forme de carreau ou de limande, avec une surface d'entrée de lumière (13) pour capter la lumière de la source lumineuse (5) et une surface de sortie de lumière (9) pour répartir la lumière captée sur une zone cible (17, 18), la lentille (2) comprenant sur un côté arrière (10) opposé à la surface de sortie de lumière (9) un champ de facettes (11) avec des facettes (12) réfléchissant la lumière et la surface d'entrée de lumière (13) étant prévue sur un côté étroit de la lentille (2) entre la surface de sortie de lumière (9) et le côté arrière à facettes (10), la source de lumière (5) étant agencée sur le bord de la lentille (2) entre la surface d'entrée de lumière (13) de la lentille (2) et un réflecteur latéral (14) entourant la lentille (2) sur le bord, de telle sorte qu'une partie de la lumière émise par la source lumineuse (5) arrive directement sur la surface d'entrée de lumière (13) et qu'une autre partie de la lumière émise par la source lumineuse (5) arrive sur la surface d'entrée de lumière (13) en étant déviée par le réflecteur (14), le réflecteur (14) formant un panneau réflecteur au moins approximativement plan, **caractérisé en ce que** la source lumineuse (5) est orientée avec sa direction principale de rayonnement à peu près parallèle à l'axe principal de la lentille (20), qui est perpendiculaire à la surface de sortie de lumière (9), et le panneau réflecteur est agencé essentiellement parallèlement à la direction principale de rayonnement de la source de lumière (5) et réduit le demi-espace éclairé par la source de lumière (5) à un quart d'espace environ, qui fait face essentiellement entièrement à la surface d'entrée de lumière (13), la lentille (2) possédant une épaisseur qui varie sur la surface de sortie de lumière (9), qui diminue à partir de la zone de la surface d'entrée de lumière (13) au moins vers le côté étroit opposé de la lentille (2).

2. Luminaire selon la revendication précédente, dans lequel le réflecteur (14) est agencé et configuré de telle sorte que la surface de sortie de lumière (9) est virtuellement réfléchie et que les rayons lumineux qui arrivent sur le réflecteur (14) depuis la source de lumière (5) sont introduits dans la lentille (2) par le biais de la surface d'entrée de lumière (13) et, le cas échéant, sont dirigés sur le côté arrière à facettes (10) avec une réflexion totale sur la surface de sortie de lumière (9), comme les rayons lumineux qui arrivent directement sur la surface d'entrée de lumière (13) depuis la source lumineuse (5).

3. Luminaire selon l'une quelconque des revendications précédentes, dans lequel la source lumineuse (5) et la surface d'entrée de lumière (13) sont configurées et agencées l'une par rapport à l'autre de telle sorte que tous les rayons lumineux qui arrivent directement sur la surface d'entrée de lumière (13) depuis la source lumineuse (5) en passant devant le réflecteur (14) sont d'abord dirigés vers la surface de sortie de lumière (9) avant d'être conduits en étant déviés à partir de là par réflexion totale vers le côté arrière à facettes (10).

4. Luminaire selon l'une quelconque des revendications précédentes, dans lequel le réflecteur latéral (14) ferme et/ou recouvre sur le bord la surface d'entrée de lumière en forme d'auge (13).

5. Luminaire selon l'une quelconque des revendications précédentes, dans lequel le réflecteur latéral (14) possède un bec réflecteur (15) qui fait saillie dans la surface d'entrée de lumière en forme d'auge (13), qui est situé en face de la source lumineuse (5) et/ou s'étend dans la direction principale de rayonnement de la source lumineuse (5).

6. Luminaire selon l'une quelconque des revendications précédentes, dans lequel le réflecteur (14) est fixé à la lentille (2) et/ou est fixé à une monture (6) qui entoure latéralement la lentille (2), qui présente des éléments de maintien (7) pour maintenir la lentille (2).

7. Luminaire selon l'une quelconque des revendications précédentes, dans lequel chacune des facettes (12) qui rayonne dans la même zone cible (17, 18) est configurée pour générer dans la zone cible (17, 18) au moins approximativement la même répartition de lumière dans la zone cible.

8. Luminaire selon la revendication précédente, dans lequel chacune des facettes (12) rayonnant dans la même zone cible (17, 18) est configurée pour éclairer respectivement essentiellement toute la zone cible (17, 18), et/ou au moins la majorité de toutes les facettes (12) rayonnant dans la même zone cible (17, 18) génèrent des faisceaux de rayons qui se chevauchent complètement au moins approximativement dans la zone cible (17, 18).

9. Luminaire selon l'une quelconque des revendications précédentes, dans lequel la lentille (2) est configurée pour éclairer plusieurs zones cibles (17, 18), les facettes (12) rayonnant dans les différentes zones cibles (17, 18) étant essentiellement réparties sur l'ensemble du champ de facettes (11) et/ou les facettes (12) rayonnant dans différentes zones cibles (17, 18) étant agencées alternativement les unes à côté des autres.

10. Luminaire selon l'une quelconque des revendications précédentes, dans lequel plus de 20, ou plus de 50, ou plus de 100 facettes sont agencées les unes à côté des autres ou les unes derrière les autres en plus de 5, ou plus de 10, ou plus de 20 rangées, et/ou le champ de facettes (11) comprend plusieurs rangées de facettes agencées en diagonale par rapport aux axes principaux de la lentille (2), qui possèdent des contours rectangulaires, notamment carrés, et qui sont agencées avec des bords de contour opposés respectivement en diagonale par rapport aux axes principaux du contour de la lentille.

11. Luminaire selon l'une quelconque des revendications précédentes, dans lequel les facettes (12) forment des facettes à surface de forme libre et/ou sont bombées sous forme convexe et/ou concave au moins par sections et/ou sont configurées sous forme plate au moins par sections.

12. Luminaire selon l'une quelconque des revendications précédentes, dans lequel des facettes (12) possèdent, dans différentes sections du champ de facettes (11), des bombements d'intensité et/ou de configuration différentes et/ou une surface d'enveloppe du côté arrière (10) de la lentille (2), située sur les facettes (12), possède un bombement convexe, notamment un bombement légèrement en forme de cuvette.

13. Luminaire selon l'une quelconque des revendications précédentes, dans lequel l'épaisseur de la lentille (2), qui varie sur la surface de sortie de lumière (9), diminue à partir de la zone de la surface d'entrée de lumière (13) vers tous les côtés, notamment de manière continue et constante, la lentille (2) possédant une épaisseur minimale de préférence dans la plage de 20 à 50 % ou 30 à 70 % ou 40 à 60 % d'une épaisseur maximale de la lentille (2).

14. Luminaire selon l'une quelconque des revendications précédentes, dans lequel la surface de sortie de lumière (9) est configurée sous forme lisse.

15. Luminaire selon l'une quelconque des revendications précédentes, dans lequel plusieurs lentilles (2) sont agencées les unes à côté des autres, notamment sont agencées avec leurs surfaces de sortie de lumière (9) dans un plan commun, différentes lentilles (2) éclairant différentes zones cibles (17, 18) et/ou possédant différentes caractéristiques de répartition de la lumière, notamment d'une part une caractéristique de répartition de la lumière de type batwing et d'autre part une caractéristique de rayonnement de type lèche-mur abrasif.
